(19) Europäisches Patentamt
European Patent Office
Office européen des brevets

(11) **EP 1 918 096 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(51) Int Cl.:
**B32B 27/36** *(2006.01)* **B32B 27/20** *(2006.01)*
**B32B 27/18** *(2006.01)*

(21) Anmeldenummer: **07020774.1**

(22) Anmeldetag: **24.10.2007**

(54) **Mehrschichtige, weisse, laserschneidbare Polyesterfolie**

White multi-layer, laser-cuttable polyester film

Feuille de polyester multicouches, blanche pouvant être découpée par laser

(84) Benannte Vertragsstaaten:
**DE FR GB IT LU**

(30) Priorität: **02.11.2006 DE 102006051658**

(43) Veröffentlichungstag der Anmeldung:
**07.05.2008 Patentblatt 2008/19**

(73) Patentinhaber: **Mitsubishi Polyester Film GmbH**
**65203 Wiesbaden (DE)**

(72) Erfinder:
• **Kliesch, Holgar, Dr.**
**65462 Ginsheim-Gustavsburg (DE)**
• **Jesberger, Martin, Dr.**
**55122 Mainz (DE)**
• **Kuhmann, Bodo**
**65594 Runkel (DE)**

• **Fischer, Ingo**
**65558 Heistenbach (DE)**
• **Bennett, Cynthia, Dr.**
**55232 Alzey (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A1- 1 905 585      EP-A2- 1 279 517**
**WO-A-02/062578      WO-A-03/074281**
**WO-A-2004/012515      DE-A1- 10 042 332**
**DE-A1- 10 043 576**

**Beschreibung**

Die Erfindung betrifft eine laserschneidbare, mindestens zweischichtige, weiße, orientierte Polyesterfolie, umfassend eine Basisschicht (B), welche einen Polyester, ein Weißpigment oder inkompatibles Polymer und ein Laserenergie absorbierendes Additiv enthält, sowie mindestens eine Deckschicht (A). Die Erfindung betrifft weiterhin ein Verfahren zur Herstellung der Folie und ihre Verwendung.

Weiße, orientierte Polyesterfolien sind bekannt.

Die DE-C-26 47 713 beschreibt einen photographischen, biaxial orientierten, opaken Schichtenträger, der aus einem linearen Polyester besteht und als alleiniges teilchenförmiges Pigment Bariumsulfat in einer Menge von 5 bis 50 Gew.-% enthält. Die Bariumsulfatteilchen haben eine durchschnittliche Korngröße von 0,5 bis 10 μm. Der photographische, biaxial orientierte, opake Schichtenträger zeichnet sich durch einen besonders hohen Weißgrad und durch eine besonders hohe Opazität aus, ohne dass der Schichtenträger durch in ihm enthaltene Zusatzstoffe während der Herstellung verfärbt wird. Außerdem weist er eine geringe Dichte, einen guten Spiegelglanz und eine geringe Gesamtlichtdurchlässigkeit auf. Die Folie weist jedoch keine ausreichend gute Laserschneidbarkeit mit Lasern im sichtbaren oder nahen Infrarotbereich auf.

EP-A-1 322 719 beschreibt ein laserschneidbares Mehrschichtmaterial, welches eine vernetzende stickstofthaltige Verbindung enthält. Solche Materialien sind nicht oder sehr schlecht verstreckbar / orientierbar und weisen hohe Gelbfärbungen bei der Regenerierung auf und sind daher für eine großtechnische Produktion von biaxial orientierten Folien eher ungeeignet.

Weiße und transparente Polyesterfolien sind in der Regel mit $CO_2$-Lasern gut schneidbar, d. h. bei einer Beispielsanwendung, in der Scheckkarten-große Stücke aus einer Folienbahn herausgeschnitten werden, lassen sich industriell anwendbare Zykluszeiten erreichen. Bei den gebräuchlicheren Nd:YAG-Lasern mit einer Wellenlänge um 1064 bzw. frequenzverdoppelt um 532 nm lassen sich deutlich weniger Karten pro Zeiteinheit bei üblichen Energien schneiden. Bezüglich der Laserschneidbarkeit weisen weiße Folien zwar gegenüber transparenten Polyesterfolien ein besseres Verhalten auf, dennoch ist der Schneidschritt häufig der geschwindigkeitsbestimmende Schritt im Prozess.

Aufgabe der vorliegenden Erfindung war es daher, eine mindestens einseitig weiße, orientierte Polyesterfolie bereitzustellen, die sich gegenüber den im Stand der Technik bekannten weißen Polyesterfolien durch verbesserte Eigenschaften, insbesondere durch einen mindestens einseitigen hohen Weißgrad, eine niedrige Transparenz und eine verbesserte Laserschneidbarkeit bei Laserweflenlängen zwischen 350 und 1500 nm auszeichnet.

Die Aufgabe wird erfindungsgemäß durch die Bereitstellung einer weißen, coextrudierten, orientierten Polyesterfolie in der Definition von Patentanspruch 1 gelöst, deren bevorzugte Ausgestaltungen in den Unteransprüchen 2 bis 11 näher umschrieben sind.

Die EP-A-1 905 583 offenbart als Stand der Technik gemäß Art. 54(3) EPÜ bereits eine weiße, coextrudierte und orientierte Polyesterfolie mit einer Basisschicht (B) und mindestens einer Deckschicht (A). Die EP-A beschreibt aber nicht die Deckschicht (A) mit den in Patentanspruch 1 definierten weißfärbenden pigmenten, und sie beschreibt nicht die Konzentration des Laserenergie absorbierenden Pigments.

Die DE-A-100 42 332 und die DE-A-100 43 576 beschreiben weiße, coextrudierte und orientierte Polyesterfolien mit einer Basisschicht (B) und einer Deckschicht (A). Die beiden Schriften beschreiben aber Ruß als Laserenergie absorbierendes Pigment und nicht Manganoxid.

Die WO-A-2002/062578 beschreibt ebenfalls eine weiße, coextrudierte und orientierte Polyesterfolie mit einer Basisschicht (B) und einer Deckschicht (A). Die WO beschreibt aber nicht, dass ein spezifisches Weißpigment zusammen mit einem Laserenergie absorbierenden Pigment in der Basisschicht (B) anwesend sein soll, jedenfalls nicht in den Mengen entsprechend Patentanspruch 1.

Das Polymer der Basisschicht (B) und der übrigen Schichten der Folie (ohne Berücksichtigung des gegebenenfalls vorhandenen inkompatiblen Polymers) besteht bevorzugt zu mindestens 90 Gew.-% aus einem thermoplastischen Polyester. Dafür geeignet sind unter anderem Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethylcyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat PENBB) und Polyester aus Isophthalsäure und Ethylenglykol sowie aus beliebigen Mischungen der genannten Carbonsäuren und Diole. Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel $HO-(CH_2)_n-OH$, wobei n bevorzugt kleiner 10 ist.

Zur Erzielung der vorgenannten Eigenschaften, insbesondere der niedrigen Transparenz und des gewünschten Weißgrades der Folie, werden in die Basisschicht (B) und in die Deckschicht (A) die notwendigen Pigmente eingearbeitet.

EP 1 918 096 B1

Hierbei hat es sich als günstig erwiesen, Titandioxid, Bariumsulfat, Zinksulfid, Zinkoxid oder - wenn auch weniger bevorzugt - Calciumcarbonat in einer geeigneten Größe und in einer geeigneten Konzentration zu verwenden. Bevorzugt wird Bariumsulfat und besonders bevorzugt wird Titandioxid verwendet. Das Titandioxid kann sowohl vom Rutil-Typ als auch vom Anatas-Typ sein. Wird Titandioxid eingesetzt, so liegt dessen Korngröße zweckmäßigerweise zwischen 0,05 und 2 $\mu$m, bevorzugt zwischen 0,1 und 0,5 $\mu$m. Wird Calciumcarbonat eingesetzt, so liegt dessen Korngröße zweckmäßigerweise zwischen 0,1 und 2,5 $\mu$m, bevorzugt ist jedoch eine Korngröße von 0,2 bis 2,0 $\mu$m. Wird Bariumsulfat eingesetzt, so liegt dessen Korngröße zweckmäßigerweise zwischen 0,3 und 3,5 $\mu$m, vorzugsweise zwischen 0,4 und 0,7 $\mu$m. Die Folie erhält durch die eingearbeiteten Weißpigmente ein brillantes weißes Aussehen. Um zu dem gewünschten Weißgrad (> 60, bevorzugt > 75 und besonders bevorzugt > 90) und zu der gewünschten niedrigen Transparenz (< 60 %, bevorzugt < 40 % und besonders bevorzugt < 20 %) zu gelangen, muss die Basisschicht hoch gefüllt sein. Die Pigmentkonzentration zur Erzielung der gewünschten niedrigen Transparenz liegt bei 2 bis 35 Gew.%, vorzugsweise bei 4 bis 25 Gew.-% und besonders bevorzugt bei 6 bis 18 Gew.%, bezogen auf die Basisschicht der Folie.

Die genannten Weißpigmente können ganz oder teilweise durch inkompatible Polymere wie Polypropylen oder Cycloolefincopolymer (COC) ersetzt werden. Inkompatible Polymere sind solche, die sich mit Polyestern nicht mischen lassen und somit zu einer Eintrübung (= Weißfärbung) beim Verstrecken führen. Solche Polymere sind beispielsweise in EP-A-1 068 949 beschrieben. Diese Polymeren können der Basisschicht in einer Menge von 1 bis 35 Gew.-%, bevorzugt 2 bis 25 Gew.-% und besonders bevorzugt 2,5 bis 10 Gew.-%, zugesetzt werden. Die Summe aus Weißpigment und inkompatiblen Polymeren darf in der Basisschicht und in der Deckschicht (A) 35 Gew.-% nicht überschreiten und 2 Gew.-% in der Basisschicht (B) und 1,0 Gew.-% in der Deckschicht (A) nicht unterschreiten. Bevorzugt liegt die Summe aus Weißpigment und inkompatiblem Polymer in der Basisschicht bei 4 bis 25 Gew.-% und besonders bevorzugt bei 6 bis 18 Gew.-%.

Zu einer weiteren Steigerung des Weißgrades können der/den Deckschichten und/oder - wenn auch weniger bevorzugt - den anderen Schichten geeignete optische Aufheller zugesetzt werden. Geeignete optische Aufheller sind beispielsweise Hostalux® KS oder Eastobrite® OB-1.

Die Basisschicht der Folie enthält neben dem Weißpigment bzw. inkompatiblem Polymer 0,1 bis 15 Gew.-%, bevorzugt 0,5 bis 5 Gew.-% und besonders bevorzugt 1,0 bis 2,5 Gew.-%, eines Laserenergie absorbierenden Pigmentes. Hierbei handelt es sich bevorzugt um Metall- oder Halbmetalloxide, insbesondere um Oxide der Elemente der fünften Periode der dritten, vierten und fünften Hauptgruppe des Periodensystems und besonders bevorzugt um Mischoxide aus dieser Gruppe.

Hierzu eignen sich z. B. Antimonoxide, insbesondere $Sb_2O_3$, Mischoxide von $Sb_2O_3$ und Zinnoxid, z. B. Mark-it™ von Engelhard (USA), andere dotierte Zinnoxide wie Mischoxide von Indium und Zinn (ITO) oder auch gemischte Zinnoxide und Fluoride, verschiedene Kupfersalze, insbesondere Kupferphosphate, insbesondere Mischphosphate von Kupfer und Zinn bzw. von Kupfer und Antimon, weiterhin Molybdän-(IV)-oxid, Wismutoxide, Lanthanborate und Manganoxide sowie Mischoxide von Kupfer und Chrom bzw. Mischungen der genannten Oxide, Phosphate usw. Es hat sich als besonders günstig erwiesen, wenn diese Metallsalze nicht als reine Partikel, sondern nur als Coatings auf Trägermaterialien wie Silikate, Aluminiumsilikate, Glimmer, Calciumcarbonat oder Titandioxid aufgebracht werden, da sich so bei annähernd gleicher Absorptionswirkung der Gesamtgehalt an Schwermetallen annähernd gleicher Absorptionswirkung der Gesamtgehalt an Schwermetallen reduzieren lässt. Beispiele für solche Pigmente sind die gecoateten Glimmerpigmente Lazerflair® 820, 825 oder Minatec® der Firma Merck, Darmstadt, DE. Bezüglich der oben angegebenen besonders günstigen Pigmentgehalte wird auch für diese Partikel das Gesamtgewicht der Partikel gezählt.

Die Partikelgröße ($d_{50}$) dieser Laserlicht absorbierenden Partikel sollte unter 25 $\mu$m, bevorzugt unter 15 $\mu$m und besonders bevorzugt unter 5 $\mu$m liegen.

Die Absorptionswirkung der oben genannten Pigmente kann durch Zugabe von Schwarzpigmenten (z. B. Lazerflair® 835, $Fe_3O_4$ auf Glimmer) oder Ruß verstärkt werden. Der Gehalt dieser Zuschlagstoffe sollte jedoch 0,75 Gew.-% nicht überschreiten und liegt bevorzugt bei unter 0,2 Gew.-% und besonders bevorzugt bei unter 0,02 Gew.-% (bezogen auf die diese Pigmente enthaltende Schicht).

Die erfindungsgemäße Folie ist mindestens zweischichtig (Basisschicht (B) und Deckschicht (A)), bevorzugt dreischichtig (Basisschicht (B) und Deckschichten (A) und (C)) und gegebenenfalls vielschichtig mit Zwischenschichten zwischen Deckschicht (A)/(C) und Basisschicht (B).

Die Deckschicht (A) enthält bevorzugt weniger als 0,5 Gew.-% und besonders bevorzugt gar keines der oben erwähnten laseraktiven Pigmente.

Bei mehr als 0,5 Gew.-% laseraktivem Pigment in der Deckschicht kann es zu einer unerwünschten Einfärbung (Laserschreiben) der Schnittkanten kommen. Der gleiche Effekt kann auch durch eine zu geringe Pigmentierung (Weißpigment oder inkompatibles Polymer) oder durch eine zu dünne Deckschicht auftreten, daher sollte die Deckschicht (A) zweckmäßigerweise eine Dicke von 0,4 $\mu$m nicht unterschreiten und ist bevorzugt dicker als 0,75 $\mu$m.

Etwaige vorhandene Zwischenschichten enthalten bevorzugt ebenfalls laseraktive Pigmente in den oben angegebenen Mengen, bezogen auf das Gewicht der Schicht.

Eine etwaige zweite Deckschicht (C) kann ebenfalls laseraktive Pigmente enthalten, enthält diese aber bevorzugt nicht.

In einer bevorzugten Ausführungsform entspricht die Zusammensetzung der Deckschicht (C) der von Deckschicht (A) (ABA oder bei unterschiedlichen Dicken der Deckschichten ABA').

In einer weiteren bevorzugten Ausführungsform ist die Deckschicht (A) siegelfähig und enthält zum Erzeugen der Siegelfähigkeit bevorzugt zwischen 4 und 50 Mol-% Isophthalsäure.

Die Schichten können zusätzlich übliche Additive wie beispielsweise Stabilisatoren und/oder Antiblockmittel enthalten. Bevorzugt werden diese Additive in den Deckschichten (Schichten (A) und (C)) eingesetzt. Diese können übliche Additive wie beispielsweise Stabilisatoren (z. B. Irganox®) und/oder Antiblockmittel wie $SiO_2$, Kaolin usw. sein. Sie werden in üblicher Weise dem Polymer bzw. der Polymermischung bereits vor dem Aufschmelzen zugesetzt. Als Stabilisatoren werden beispielsweise Phosphorverbindungen wie Phosphorsäure oder Phosphorsäureester eingesetzt.

Typische Antiblockmittel sind anorganische und/oder organische Partikel, beispielsweise kristalline oder amorphe Kieselsäure, Talk, Magnesiumcarbonat, Bariumcarbonat, Calciumsulfat, Lithiumphosphat, Calciumphosphat, Magnesiumphosphat, Aluminiumoxid, Aluminiumsilikate, LiF, Calcium-, Barium-, Zink- oder Mangan-Salze der eingesetzten Dicarbonsäuren, Titandioxid, Kaolin oder vernetzte Polystyrol-, PMMA- oder Acrylat-Partikel.

Als Antiblockmittel können auch Mischungen von zwei und mehreren verschiedenen Antiblockmitteln oder Mischungen von Antiblockmitteln gleicher Zusammensetzung, aber unterschiedlicher Partikelgröße gewählt werden. Die Antiblockmittel und die Pigmente für die Erzielung des gewünschten Weißgrades und der niedrigen Transparenz der Folie können den einzelnen Schichten in den jeweils vorteilhaften Konzentrationen, z. B. als glykolische Dispersion während der Polykondensation oder über Masterbatche bei der Extrusion zugegeben werden.

Um eine gute Schneidbarkeit zu erreichen, hat es sich als günstig erwiesen, wenn die Dicke der Deckschicht (A) bevorzugt unter 20 %, besonders bevorzugt unter 12,5 % und idealerweise unter 8,5 % der Gesamtdicke der Folie liegt.

Die Gesamtdicke der erfindungsgemäßen Polyesterfolie beträgt 10 bis 500 $\mu$m, insbesondere 15 bis 200 $\mu$m, vorzugsweise 20 bis 100 $\mu$m, wobei die Summe aus Basisschicht (B) und etwaigen Zwischenschichten einen Anteil von 40 bis 97 Gew.-%, vorzugsweise 75 bis 96 Gew.-% und besonders bevorzugt 85 bis 95 Gew.-%, an der Gesamtdicke der Folie hat.

In einer bevorzugten Ausführungsform weist die erfindungsgemäße Folie bei 200 °C einen Schrumpf in Längs- und Querrichtung von unter 10 %, bevorzugt unter 6 % und besonders bevorzugt unter 4 %, auf. Diese Folie weist weiterhin bei 100°C eine Längung (Ausdehnung) von weniger als 3 %, bevorzugt weniger als 1 % und besonders bevorzugt weniger als 0,3 %, auf. Diese Formstabilität kann beispielsweise durch geeignete Relaxation der Folie vor dem Aufwickeln erhalten werden (s. Verfahrensbeschreibung). In dieser Ausführungsform hat die Folie durch ihre Formstabilität beim Schneiden ein saubereres Schnittbild, und es tritt auch im Randbereich keine Wellenbildung auf Die genannten Dimensionseigenschaften der erfindungsgemäßen Folie sind insbesondere deshalb von Bedeutung, weil diese das Verhalten der Folie beim Laserschneiden beeinflussen. In dem hierfür kritischen Temperaturbereich soll die Folie möglichst dimensionsstabil sein. Temperaturen von ca. 100 °C sind innerhalb der Folie in einem gewissen radialen Abstand um den Auftreffpunkt des Schneidlasers zu erwarten. Temperaturen um 200°C treten in der direkten Umgebung des Laserschnitts auf. In beiden Fällen soll die Folie dimensionsstabil sein; zum einen soll sie sich im unteren Temperaturbereich (um 100°C) nicht zu sehr ausdehnen und zum anderen im oberen Temperaturbereich (um 200 °C) nicht zu sehr schrumpfen.

In einer bevorzugten Ausführungsform weist die Folie zudem einen E-Modul in beiden Folienrichtungen von größer 3000 N/mm$^2$ und bevorzugt von größer 3500 N/mm$^2$ und besonders bevorzugt von größer 4100 N/mm$^2$, in Längs- und Querrichtung auf. Die F5-Werte (Kraft bei 5 % Dehnung) liegen bevorzugt in Längs- und Querrichtung bei über 80 N/mm$^2$ und bevorzugt bei über 90 N/mm$^2$. Bei Unterschreitung dieser Werte kann es beim Laserschneiden zu Verdehnungen der Folie kommen, wenn eine Zug-, Biege- oder Druckkraft auf der Folie lastet. Diese mechanischen Eigenschaften können beispielsweise durch geeignete biaxiale Streckung der Folie erhalten werden (s. Verfahrensbeschreibung).

In einer weiteren bevorzugten Ausführungsform ist die Folie mindestens einseitig mit einer Haftvermittlung für Druckfarben beschichtet. Als Beschichtungen eignen sich beispielsweise Acrylate oder Copolyester mit Sulfoisophthalsäure-Gehalten > 0,2 Gew.%.

**Verfahren**

Die Polyester-Matrixpolymere der einzelnen Schichten werden durch Polykondensation hergestellt, entweder ausgehend von Dicarbonsäuren und Ethylenglykol (sog. "PTA-Verfahren") oder auch ausgehend von den Estern der Dicarbonsäuren, vorzugsweise die Dimethylester, und Ethylenglykol (sog. "DMT-Verfahren"). Verwendbare Polyethylenterephthalate haben bevorzugt SV-Werte im Bereich von 600 bis 900 und Polyethylen-2,6-naphthalate von ca. 500 bis 800.

Die Weißpigmente, anorganischen Partikel oder vernetzten organischen Partikel können bereits bei der Herstellung des Polyesters zugegeben werden. Hierzu werden die Partikel in Ethylenglykol dispergiert, gegebenenfalls gemahlen, dekantiert usw. und dem Reaktor entweder im (Um)-Esterungs- oder Polykondensationsschritt zugegeben. Bevorzugt kann alternativ ein konzentriertes partikelhaltiges oder additivhaltiges Polyester-Masterbatch mit einem Zweischneckenextruder hergestellt werden und bei der Folienextrusion mit partikelfreiem Polyester verdünnt werden. Eine weitere Möglichkeit besteht darin, Partikel und Additive direkt bei der Folienextrusion in einem Zweischneckenextruder zuzugeben. Die letzten beiden Varianten sind insbesondere von Vorteil für die Zugabe der laserlichtabsorbierenden Pigmente, wenn diese Antimonoxid oder Mischoxide von Antimon mit anderen Verbindungen enthalten, da diese katalytische Aktivität in der Polyesterherstellung besitzen und die Polykondensation schwer beherrschbar machen.

Nicht vernetzte organische Partikel werden entweder in einem Zweischneckenextruder zu einem Masterbatch verarbeitet oder direkt bei der Folienextrusion zugegeben.

Wenn Einschneckenextruder verwendet werden, dann hat es sich als vorteilhaft erwiesen, die Polyester vorher zu trocknen. Bei Verwendung eines Zweischneckenextruders mit Entgasungszone kann auf den Trocknungsschritt verzichtet werden.

Es hat sich als vorteilhaft erwiesen, die laseraktives Material enthaltende Schicht (B) mit einem Zweischneckenextruder zu verarbeiten, da der Trocknungsschritt, welcher bei Einschneckenextrudern für die Verarbeitbarkeit vorteilhaft ist, zu einer Verfärbung des Polymers führen kann. Dies gilt insbesondere dann, wenn der Basisschicht ein Regenerat aus Folienverschnitt und Randstreifen zugeführt wird, da diese bereits mehrere Extrusionsschritte hinter sich hat. In jedem Fall sollten Trocknertemperaturen oberhalb von 150 °C vermieden werden.

Zunächst wird das Polymere bzw. die Polymermischung der einzelnen Schichten in einem Extruder komprimiert und verflüssigt. Dann werden die Schmelzen in einer Mehrschichtdüse zu flachen Schmelzefilmen ausgeformt, übereinander geschichtet, durch eine Breitschlitzdüse gepresst und auf einer Kühlwalze und einer oder mehreren Abzugswalzen abgezogen, wobei sie abkühlt und sich verfestigt.

Die erfindungsgemäße Folie wird biaxial orientiert, d. h. biaxial gestreckt. Die biaxiale Verstreckung der Folie wird am häufigsten sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Das Verstrecken in Längsrichtung lässt sich mit Hilfe zweier entsprechend dem angestrebten Streckverhältnis verschieden schnell laufender Walzen durchführen. Zum Querverstrecken benutzt man im Allgemeinen einen entsprechenden Kluppenrahmen.

Statt der sequenziellen Streckung ist auch eine simultane Streckung der Folie möglich, aber nicht notwendig.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80 bis 130 °C (Aufheiztemperaturen 80 bis 130 °C) und in Querrichtung in einem Temperaturbereich von 90 °C (Beginn der Streckung) bis 140°C (Ende der Streckung) durchgeführt. Das Längsstreckverhältnis liegt im Bereich von 2,0:1 bis 5,5:1, bevorzugt von 2,2:1 bis 5,0:1. Das Querstreckverhältnis liegt allgemein im Bereich von 2,4:1 bis 5,0:1, bevorzugt von 2,6:1 bis 4,5:1.

Zum Erreichen der gewünschten Transparenzen und des gewünschten Weißgrades hat es sich als vorteilhaft erwiesen, wenn die Strecktemperatur (sowohl in MD-Richtung als auch TD-Richtung) unter 120 °C und bevorzugt unter 110 °C liegt.

Vor der Querstreckung können eine oder beide Oberfläche(n) der Folie nach den an sich bekannten Verfahren in-line beschichtet werden. Die In-line-Beschichtung kann beispielsweise zu einer verbesserten Haftung zwischen einer Metallschicht oder einer Druckfarbe und der Folie, zu einer Verbesserung des antistatischen Verhaltens oder des Verarbeitungsverhaltens der Folie führen. Wenn die äußeren coextrudierten Schichten keine anorganischen Partikel zur Verbesserung der Schlupf- und Wickelcharakteristik enthalten, so kann an dieser Stelle eine partikelhaltige Beschichtung aufgebracht werden.

Bei der nachfolgenden Thermofixierung wird die Folie über eine Zeitdauer von etwa 0,1 bis 10 s unter Spannung bei einer Temperatur von 150 bis 250 °C gehalten und zum Erreichen der bevorzugten Schrumpf- und Längungswerte um mindestens 1 %, bevorzugt mindestens 3 % und besonders bevorzugt mindestens 4 %, in Querrichtung relaxiert. Diese Relaxation findet bevorzugt in einem Temperaturbereich von 150 bis 190 °C statt. Bevorzugt finden < 25 % und > 5 % der Gesamtrelaxation innerhalb der ersten 25 % der Relaxationszeit statt. Anschließend wird die Folie in üblicher Weise aufgewickelt.

Bei der Herstellung der Folie ist gewährgeleistet (insbesondere wenn für die Basisschicht (B) ein Zweischneckenextruder verwendet wird), dass das Regenerat in einer Konzentration von 20 bis 60 Gew.-%, bezogen auf das Gesamtgewicht der Folie, wieder der Extrusion zugeführt werden kann, ohne dass dabei die physikalischen und optischen Eigenschaften der Folie nennenswert negativ beeinflusst werden, d. h. es tritt keine Einfärbung durch Thermoabsorber und thermische Belastung auf.

Die erfindungsgemäße Folie zeichnet sich durch eine gute Verarbeitbarkeit, ein gegenüber handelsüblichen Weißfolien deutlich verbessertes Schneidverhalten mit Laserlicht im Wellenlängenbereich von 350 bis 3000 nm und hohe Weißgrade sowie niedrige Transparenz aus.

Besonders gute Ergebnisse lassen sich beim Laserschneiden von Folien erreichen, die auf mindestens einer Seite farbig beschichtet sind und bei denen ein Schriftbild durch das Wegbrennen (wie in EP-A-0 645 747 beschrieben) dieser Schicht mit einem Laser erzeugt wird (Beispiel weiße Schrift auf schwarzem Grund) und anschließend das/die fertige Label/Karte mit einem Laser aus der Folienbahn ausgeschnitten wird. Insbesondere in diesem Prozess ist die erfindungsgemäße Folie den Standard-PET-Weißfolien in ihrer Schneidgeschwindigkeit deutlich überlegen und hat nicht den Nachteil, dass der zum Wegbrennen der Oberflächenfarbschicht eingesetzte Laser auch zu einer Einfärbung/ Schwärzung der Folie führt, da die laseraktive Schicht durch eine weiße/trübe Deckschicht abgedeckt ist.

Zur Charakterisierung der Rohstoffe und der Folien wurden die folgenden Messmethoden benutzt:

**Messung des mittleren Partikel-Durchmessers $d_{50}$**

Die Bestimmung des mittleren Durchmessers $d_{50}$ wird mittels Laser auf einem Horiba LA 500 mittels Laserdiffraktion durchgeführt (andere Messgeräte sind z. B. Malvern Mastersizer oder Sympathec Helos, welche das gleiche Messprinzip verwenden). Die Proben werden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert $d_{50}$ (= Lagemaß für den Mittelwert) und das Streumaß, den sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse den gewünschten $d_{50}$-Wert.

**Primärkorngröße von Nanoteilchen (z. B. Aerosil® und Nyacol®)**

Die Bestimmung der mittleren Größe der Primärteilchen erfolgt an transmissions-elektronenmikroskopischen (TEM-) Aufnahmen des zu untersuchenden Produktes. Wenn die Probe als Folie oder Kunststoffgranulat vorliegt, so ist die TEM-Untersuchung an Mikrotomschnitten durchzuführen.

**Transparenz**

Die Transparenz wird nach ASTM-D 1033-77 gemessen.

**Weißgrad**

Der Weißgrad wird nach Berger bestimmt, wobei in der Regel 20 Folienlagen aufeinander gelegt werden. Die Bestimmung des Weißgrades erfolgt mit Hilfe des elektrischen Remissionsphotometers "ELREPHO" der Firma Zeiss, Oberkochem (DE), Normlichtart C, 2°-Normalbeobachter. Der Weißgrad WG wird als

$$WG = RY + 3RZ - 3RX$$

definiert, wobei RX, RY, RZ entsprechende Reflexionsfaktoren bei Einsatz eines X-, Y-, Z-Farbmessfilters sind. Als Weißstandard wird ein Pressling aus Bariumsulfat (DIN 5033, Teil 9) verwendet. Eine ausführliche Beschreibung ist z. B. in Hansl Loos "Farbmessung", Verlag Beruf und Schule, Itzehoe (1989), beschrieben.

**SV-Wert (Standardviskosität)**

Die Standardviskosität SV (DCE) wird, angelehnt an DIN 53 726, bei einer Konzentration von 1 Gew.-% in Dichloressigsäure gemessen. Aus der relativen Viskosität ($\eta_{rel}$) wird der dimensionslose SV-Wert wie folgt ermittelt:

$$SV = (\eta_{rel}-1) \cdot 1000$$

Die intrinsische Viskosität (IV) korreliert wie folgt mit der Standardviskosität

$$IV [\eta] = 6{,}907 \cdot 10^{-4} \, SV \, (DCE) + 0{,}063096 \, [dl/g]$$

**Mechanische Eigenschaften**

Die mechanischen Eigenschaften werden über Zugprüfung angelehnt an DIN EN ISO 572-1 und -3 an 100 mm x 15 mm großen Folienstreifen bestimmt. Die Längenänderung wird über einen Traversenwegaufnehmer gemessen. Der E-Modul wird bei einer Zuggeschwindigkeit von 10 %/min als Steigung zwischen 0,2 und 0,3 Dehnung bestimmt. Der σ5-Wert (Kraft bei 5 % Dehnung) wird mit einer Zuggeschwindigkeit von 100 %/min gemessen.

**Schichtdicken**

Die Folie wird in eine Formmasse eingebettet, mit einem Mikrotom durchgeschnitten und die Oberfläche mit Argon-Plasma angeätzt und die Schnittkante im Rasterelektronenmikroskop betrachtet. Durch die unterschiedliche Pigmentierung der Schichten sind die Schichtdicken leicht voneinander zu unterscheiden und auszumessen.

**Schrumpf/Längung**

Der thermische Schrumpf bzw. die Längung wird an quadratischen Folienmustern mit einer Kantenlänge von 10 cm bestimmt. Die Proben werden genau ausgemessen (Kantenlänge $L_0$), 15 min bei 200 °C bzw. 100 °C in einem Umlufttrockenschrank getempert und anschließend bei Raumtemperatur genau ausgemessen (Kantenlänge L). Der Schrumpf bzw. die Längung ergibt sich aus der Gleichung

$$\text{Schrumpf [\%]} = 100 \ (L_0 - L) / L_0$$

$$\text{Längung [\%]} = 100 \ (L - L_0) / L_0$$

**Laserschneidbarkeit**

Die Laserschneidbarkeit kann mit jedem zum Laserschneiden geeigneten Lasersystem mit einer Emissionswellenlänge von 500 bis 3000 nm getestet werden. Vorzugsweise wird ein Nd:YAG-Laser mit 1064 nm Emissionswellenlänge benutzt. Beispielhaft kann das in EP-A-1 322 719 zur Messung der Schneidbarkeit verwendete System benutzt werden. Der Laser wird so eingestellt, dass die Geschwindigkeit gerade ausreicht, um ein Rechteck der Kantenlängen 7 x 4 cm sauber auszuschneiden. Sauber heißt, dass das Rechteck keine Verbindung mehr zum Rest der Folie aufweist und beim Herausnehmen keine Fäden zieht. Die maximale Geschwindigkeit wird mit der Geschwindigkeit verglichen, die mit einer handelsüblichen Weißfolie gleicher Dicke erreicht wird (unter den sonst gleichen Bedingungen wie z. B. Abstand, Energie, Frequenz usw.). Eine handelsübliche Weißfolie gleicher Dicke ist z. B. Hostaphan WDW oder Hostaphan WO. Wenn keine Folie in gleicher Dicke erhältlich ist, dann muss nach dem angegebenen Verfahren eine Dreischichtfolie mit 7 % $TiO_2$ (Teilchengröße 0,15 bis 1,2 $\mu$m) hergestellt werden und als Vergleich herangezogen werden.
Es werden aus unterschiedlichen Folienstücken 10 Rechtecke ausgeschnitten. Wenn eine 10 % höhere Geschwindigkeit als bei der Vergleichsfolie erreicht wird, dann ist das Schneidverhalten gut; wenn die Geschwindigkeit um mehr als 30 % gesteigert werden kann, dann ist das Scheidverhalten sehr gut.
Für die unten stehenden Messungen wurde das folgende Lasersystem benutzt: Nd:YAG-Laser (1064 nm) der Fa. Trumpf in Schramberg, VectorMark® VMc3.
Als Vergleich dienten Hostaphan® WDW50 (Füllstoff $TiO_2$) und Hostaphan® WO 50 (Füllstoff $BaSO_4$). Die Dicke betrug jeweils 50 $\mu$m.

**Beispiele**

**Beispiel 1 (erfindungsgemäß)**

Es wurden 3 Polymer-Mischungen in 3 Zweischnecken-Extrudern bei 290 °C aufgeschmolzen:

1. 85,9 Gew.-% Polyethylenterephthalat mit einem SV-Wert von 800, 0,1 Gew.-% $SiO_2$ (Silysia® 340 der Firma Fuji Silysia, JP) und 14 Gew.-% Titandioxid (Hombitan® LW-S-U der Fa. Sachtleben, DE) mit einem mittleren Teilchendurchmesser $d_{50}$ von ca. 0,3 $\mu$m → Schicht A
2. 84 Gew.-% Polyethylenterephthalat mit einem SV-Wert von 800 und 14 Gew.-% Titandioxid (Hombitan® LW-S-U der Fa. Sachtleben, DE) mit einem mittleren Teilchendurchmesser $d_{50}$ von ca. 0,3 μm und 2 Gew.-% Lazerflair® 820 (Merck KGaA, Darmstadt, DE) → Schicht B

3. 85,9 Gew.-% Polyethylenterephthalat mit einem SV-Wert von 800, 0,1 Gew.-% $SiO_2$ (Silysia® 340 der Firma Fuji Silysia, JP) und 14 Gew.-% Titandioxid (Hombitan® LW-S-U der Fa. Sachtleben, DE) mit einem mittleren Teilchendurchmesser $d_{50}$ von ca. 0,3 μm → C-Schicht

Titandioxid und Lazerflair® wurden in fertiges PET-Polymer mittels eines Zweischneckenextruders eingebracht. Die $SiO_2$-Partikel wurden bereits bei der Polykondensation hinzugegeben.

Die Polymermischungen wurden in einem Adapter zusammengeführt und durch eine Breitschlitzdüse auf eine auf 60 °C temperierte Kühlwalze elektrostatisch angelegt. Anschließend wurde die Vorfolie bei folgenden Bedingungen längs- und dann quergestreckt:

| Längsstreckung | Aufheiztemperatur | 75-115 | °C |
|---|---|---|---|
| | Strecktemperatur | 115 | °C |
| | Längsstreckverhältnis | 3,7 | |
| Querstreckung | Aufheiztemperatur | 100 | °C |
| | Strecktemperatur | 110°C | |
| | Querstreckverhältnis | 4,0 | |
| Fixierung | Temperatur | 237-150 °C | |
| | Dauer | 2 | s |
| | Relaxation in TD-Richmng bei 200 - 150 °C | 7 | % |

Die so erhaltene Folie hatte eine Gesamtdicke von 50 μm, und die Deckschichten (A) und (C) waren beide 4 μm dick. Der Weißgrad der Folie betrug 92, die Transparenz 17 %, das E-Modul in MD-Richtung 4410 N/mm² und in TD-Richtung 4905 N/mm². Der F5-Wert lag in MD-Richtung bei 97 N/mm² und in TD-Richtung bei 101 N/mm². Der Schrumpf in MD-Richtung bei 200 °C lag bei 2,7 % und bei 0,1 % in TD-Richtung. Die Folie wies eine um 65 % höhere Schneidgeschwindigkeit auf als Hostaphan® WO50 und eine um 61 % höhere als Hostaphan® WDW50.

**Beispiel 2 (erfindungsgemäß)**

Es wurden 3 Polymer-Mischungen in 3 Zweischnecken-Extrudern bei 290 °C aufgeschmolzen:

1. 91,9 Gew.-% Polyethylenterephthalat mit einem SV-Wert von 800, 0,1 Gew.-% $SiO_2$ (Silysia® 320 der Firma Fuji Silysia, JP) und 8 Gew.-% Titandioxid (Hombitan® LW-S-U der Fa. Sachtleben, DE) mit einem mittleren Teilchendurchmesser $d_{50}$ von ca. 0,3 μm → Schicht A

2. 91 Gew.-% Polyethylenterephthalat mit einem SV-Wert von 800 und 8 Gew.-% Titandioxid (Hombitan® LW-S-U der Fa. Sachtleben, DE) mit einem mittleren Teilchendurchmesser $d_{50}$ von ca. 0,3 μm und 1 Gew.-% Nano ITO (Primärteilchengröße $d_{50}$ ca. 15 μm, Partikelgröße der Agglomerate in der Folie im Mittel etwa 200 nm) der Firma Nanogate Advanced Materials, Saarbrücken, DE → Schicht B

3. 91,9 Gew.-% Polyethylenterephthalat mit einem SV-Wert von 800, 0,1 Gew.-% $SiO_2$ (Silysia® 320 der Firma Fuji Silysia, JP) und 8 Gew.-% Titandioxid (Hombitan® LW-S-U der Fa. Sachtleben, DE) mit einem mittleren Teilchendurchmesser $d_{50}$ von ca. 0,3 μm → C-Schicht

Titandioxid und Nano ITO wurden in fertiges PET-Polymer mittels eines Zweischneckenextruders eingebracht. Die $SiO_2$-Partikel wurden bereits bei der Polykondensation hinzugegeben.

Die Polymermischungen wurden in einem Adapter zusammengeführt und durch eine Breitschlitzdüse auf eine auf 60 °C temperierte Kühlwalze elektrostatisch angelegt. Anschließend wurde die Vorfolie bei folgenden Bedingungen längs- und dann quergestreckt:

| Längsstreckung | Aufheiztemperatur | 75-115 | °C |
|---|---|---|---|
| | Strecktemperatur | 115 | °C |
| | Längsstreckverhältnis | 3,7 | |

(fortgesetzt)

| Querstreckung | Aufheiztemperatur | 100 | °C |
|---|---|---|---|
| | Strecktemperatur | 110 °C | |
| | Querstreckverhältnis | 4,0 | |
| Fixierung | Temperatur | 237 - 150 °C | |
| | Dauer | 2 | S |
| | Relaxation in TD-Richtung bei 200 -150 °C | 7 | % |

Die so erhaltene Folie hatte eine Gesamtdicke von 50 $\mu$m, und die Deckschichten (A) und (C) waren beide 3,5 $\mu$m dick. Der Weißgrad der Folie betrug 88, die Transparenz 29 %, das E-Modul in MD-Richtung 4632 N/mm$^2$ und in TD-Richtung 5210 N/mm$^2$. Der F5-Wert lag in MD-Richtung bei 101 N/mm$^2$ und in TD-Richtung bei 106 N/mm$^2$. Der Schrumpf in MD-Richtung bei 200 °C lag bei 2,2 % und bei 0,1 % in TD-Richtung. Die Folie wies eine um 30 % höhere Schneidgeschwindigkeit auf als Hostaphan® WO50 und eine um 28 % höhere als Hostaphan® WDW50.

**Beispiel 3 (erfindungsgemäß)**

Es wurden 3 Polymer-Mischungen in 3 Zweischnecken-Extrudern bei 290 °C aufgeschmolzen:

1. 91,9 Gew.-% Polyethylenterephthalat mit einem SV-Wert von 800, 0,1 Gew.-% SiO$_2$ (Silysia® 320 der Firma Fuji Silysia, JP) und 8 Gew.-% Titandioxid (Hombitan® LW-S-U der Fa. Sachtleben, DE) mit einem mittleren Teilchendurchmesser d$_{50}$ von ca. 0,3 $\mu$m → Schicht A
2. 90 Gew.-% Polyethylenterephthalat mit einem SV-Wert von 800 und 8 Gew.-% Titandioxid (Hombitan® LW-S-U der Fa. Sachtleben, DE) mit einem mittleren Teilchendurchmesser d$_{50}$ von ca. 0,3 $\mu$m und 2 Gew.% Lazerflair® 820 (Merck KGaA, Darmstadt, DE) → Schicht B
3. 91,9 Gew.-% Polyethylenterephthalat mit einem SV-Wert von 800, 0,1 Gew.-% SiO$_2$ (Silysia® 320 der Firma Fuji Silysia, JP) und 8 Gew.-% Titandioxid (Hombitan® LW-S-U der Fa. Sachtleben, DE) mit einem mittleren Teilchendurchmesser d$_{50}$ von ca. 0,3 $\mu$m → C-Schicht

Titandioxid und Lazerflair® wurden in fertiges PET-Polymer mittels eines Zweischneckenextruders eingebracht. Die SiO$_2$-Partikel wurden bereits bei der Polykondensation hinzugegeben.

Die Polymermischungen wurden in einem Adapter zusammengeführt und durch eine Breitschlitzdüse auf eine auf 60 °C temperierte Kühlwalze elektrostatisch angelegt. Anschließend wurde die Vorfolie bei folgenden Bedingungen längs- und dann quergestreckt:

| Längsstreckung | Autheiztemperatur | 75-115 | °C |
|---|---|---|---|
| | Strecktemperatur | 115 | °C |
| | Längsstreckverhältnis | 3,7 | |
| Querstreckung | Autheiztemperatur | 100 | °C |
| | Strecktemperatur | 110 | °C |
| | Querstreckverhältnis | 4,0 | |
| Fixierung | Temperatur | 237-150 | °C |
| | Dauer | 2 | S |
| | Relaxation in TD-Richtung bei 200 -150 °C | 7 | % |

Die so erhaltene Folie hatte eine Gesamtdicke von 50 $\mu$m, und die Deckschichten (A) und (C) waren beide 4 $\mu$m dick. Der Weißgrad der Folie betrug 87, die Transparenz 26 %, das E-Modul in MD-Richtung 4455 N/mm$^2$ und in TD-Richtung 5205 N/mm$^2$. Der F5-Wert lag in MD-Richtung bei 102 N/mm$^2$ und in TD-Richtung bei 115 N/mm$^2$. Der Schrumpf in MD-Richtung bei 200 °C lag bei 2,6 % und bei 0,2 % in TD-Richtung. Die Folie wies eine um 62 % höhere Schneidgeschwindigkeit auf als Hostaphan® WO50 und eine um 60 % höhere als Hostaphan® WDW50.

**Beispiel 4 (erfindungsgemäß)**

Es wurden 3 Polymer-Mischungen in 3 Zweischnecken-Extrudern bei 290°C aufgeschmolzen:

1. 85 Gew.-% Polyethylenterephthalat mit einem SV-Wert von 800 und einem Isophthalsäuregehalt von 18 Mol-%, 0,1 Gew.-% $SiO_2$ (Silysia® 320 der Firma Fuji Silysia, JP) und 14,9 Gew.-% Bariumsulfat (Blanc fixe® F der Fa. Sachtleben, DE) mit einem mittleren Teilchendurchmesser $d_{50}$ von ca. 1 μm → Schicht A

2. 83 Gew.-% Polyethylenterephthalat mit einem SV-Wert von 800 und 15 Gew.-% Bariumsulfat (Blanc fixe® F der Fa. Sachtleben, DE) mit einem mittleren Teilchendurchmesser $d_{50}$ von ca. 0,3 μm und 2 Gew.-% Lazerflair® 825 (Merck KGaA, Darmstadt, DE) → Schicht B

3. 85 Gew.-% Polyethylenterephthalat mit einem SV-Wert von 800, 0,1 Gew.-% $SiO_2$ (Silysia® 320 der Firma Fuji Silysia, JP) und 14,9 Gew.-% Bariumsulfat (Blanc fixe® F der Fa. Sachtleben, DE) mit einem mittleren Teilchendurchmesser $d_{50}$ von ca. 1 μm → C-Schicht

Lazerflair® wurde in fertiges PET-Polymer mittels eines Zweischneckenextruders eingebracht. Die $SiO_2$-Partikel und das Bariumsulfat wurden bereits bei der Polykondensation hinzugegeben.

Die Polymermischungen wurden in einem Adapter zusammengeführt und durch eine Breitschlitzdüse auf eine auf 60 °C temperierte Kühlwalze elektrostatisch angelegt. Anschließend wurde die Vorfolie bei folgenden Bedingungen längs- und dann quergestreckt:

| Längsstreckung | Aufheiztemperatur | 75-107 | °C |
|---|---|---|---|
| | Strecktemperatur | 107 | °C |
| | Längsstreckverhältnis | 3,7 | |
| Querstreckung | Autheiztemperatur | 100 | °C |
| | Strecktemperatur | 105 | °C |
| | Querstreckverhältnis | 4,0 | |
| Fixierung | Temperatur | 237-150 | °C |
| | Dauer | 2 | s |
| | Relaxation in TD-Richtung bei 200 - 150 °C | 7 | % |

Die so erhaltene Folie hatte eine Gesamtdicke von 50 μm, und die Deckschichten (A) und (C) waren beide 4 μm dick. Der Weißgrad der Folie betrug 93, die Transparenz 19 %, das E-Modul in MD-Richtung 4020 N/mm² und in TD-Richtung 4875 N/mm². Der F5-Wert lag in MD-Richtung bei 95 N/mm² und in TD-Richtung bei 98 N/mm². Der Schrumpf in MD-Richtung bei 200 °C lag bei 2,7 % und bei 0,3 % in TD-Richtung. Die Folie wies eine um 50 % höhere Schneidgeschwindigkeit auf als Hostaphan® WO50 und eine um 49 % höhere als Hostaphan® WDW50.

**Vergleichsbeispiel 1 (nicht erfindungsgemäß)**

Es wurden 3 Polymer-Mischungen in 3 Zweischnecken-Extrudern bei 290 °C aufgeschmolzen:

1. 85 Gew.-% Polyethylenterephthalat mit einem SV-Wert von 800 und einem Isophthalsäuregehalt von 18 Mol-%, 0,1 Gew.-% $SiO_2$ (Silysia® 320 der Firma Fuji Silysia, JP) und 14,9 Gew.-% Bariumsulfat (Blanc fixe® F der Fa. Sachtleben, DE) mit einem mittleren Teilchendurchmesser $d_{50}$ von ca. 1 μm → Schicht A

2. 85 Gew.-% Polyethylenterephthalat mit einem SV-Wert von 800 und 15 Gew.-% Bariumsulfat (Blanc Fixes® F der Fa. Sachtleben, DE) mit einem mittleren Teilchendurchmesser $d_{50}$ von ca. 0,3 μm → Schicht B

3. 85 Gew.-% Polyethylenterephthalat mit einem SV-Wert von 800, 0,1 Gew.-% $SiO_2$ (Silysia® 320 der Firma Fuji Silysia, Jp) und 14,9 Gew.-% Bariumsulfat (Blanc Fixe® F der Fa. Sachtleben, DE) mit einem mittleren Teilchendurchmesser $d_{50}$ von ca. 1 μm → C-Schicht

Die $SiO_2$-Partikel und das Bariumsulfat wurden bereits bei der Polykondensation hinzugegeben.

Die Polymermischungen wurden in einem Adapter zusammengeführt und durch eine Breitschlitzdüse auf eine auf 60 °C temperierte Kühlwalze elektrostatisch angelegt. Anschließend wurde die Vorfolie bei folgenden Bedingungen längs- und dann quergestreckt:

| Längsstreckung | Aufheiztemperatur | 75-107 | °C |
|---|---|---|---|
| | Strecktemperatur | 107 | °C |
| | Längsstreckverhältnis | 3,7 | |
| Querstreckung | Aufheiztemperatur | 100 | °C |
| | Strecktemperatur | 105 | °C |
| | Querstreckverhältnis | 4,0 | |
| Fixierung | Temperatur | 237 - 150 | °C |
| | Dauer | 2 | S |
| | Relaxation in TD-Richtung bei 200 - 150 °C | 7 | % |

Die so erhaltene Folie hatte eine Gesamtdicke von 50 μm, und die Deckschichten (A) und (C) waren beide 4 μm dick. Der Weißgrad der Folie betrug 94, die Transparenz 22 %, das E-Modul in MD-Richtung 4100 N/mm$^2$ und in TD-Richtung 5085 N/mm$^2$. Der F5-Wert lag in MD-Richtung bei 99 N/mm$^2$ und in TD-Richtung bei 103 N/mm$^2$. Der Schrumpf in MD-Richtung bei 200 °C lag bei 2,7 % und bei 0,3 % in TD-Richtung. Die Folie wies keine höhere Schneidgeschwindigkeit auf als Hostaphan® WO50 und eine um 4 % niedrigere als Hostaphan® WDW50.

**Vergleichsbeispiel 2 (erfindungsgemäß, aber weniger bevorzugt)**

Es wurden 3 Polymer-Mischungen in 3 Zweischnecken-Extrudern bei 290 °C aufgeschmolzen:

1. 83,9 Gew.-% Polyethylenterephthalat mit einem SV-Wert von 800, 0,1 Gew.-% SiO$_2$ (Silysia® 340 der Firma Fuji Silysia, JP) und 14 Gew.-% Titandioxid (Hombitan® LW-S-U der Fa. Sachtleben, DE) und 2 Gew.-% Lazerflair® 820 (Merck KGaA, Darmstadt, DE) mit einem mittleren Teilchendurchmesser von ca. 0,3 μm → Schicht A
2. 84 Gew.-% Polyethylenterephthalat mit einem SV-Wert von 800 und 14 Gew.-% Titandioxid (Hombitan® LW-S-U der Fa. Sachtleben, DE) mit einem mittleren Teilchendurchmesser d$_{50}$ von ca. 0,3 μm und 2 Gew.-% Lazerflair® 820 (Merck KGaA, Darmstadt, DE) → Schicht B
3. 83,9 Gew.-% Polyethylenterephthalat mit einem SV-Wert von 800, 0,1 Gew.-% SiO$_2$ (Silysia® 340 der Firma Fuji Silysia, JP) und 14 Gew.-% Titandioxid (Hombitan® LW-S-U der Fa. Sachtleben, DE) und 2 Gew.-% Lazerflair® 820 (Merck KGaA, Darmstadt, DE) mit einem mittleren Teilchendurchmesser d$_{50}$ von ca. 0,3 μm → C-Schicht

Titandioxid und Lazerflair® wurden in fertiges PET-Polymer mittels eines Zweischneckenextruders eingebracht. Die SiO$_2$-Partikel wurden bereits bei der Polykondensation hinzugegeben.
Die Polymermischungen wurden in einem Adapter zusammengeführt und durch eine Breitschlitzdüse auf eine auf 60 °C temperierte Kühlwalze elektrostatisch angelegt. Anschließend wurde die Vorfolie bei folgenden Bedingungen längs- und dann quergestreckt:

| Längsstreckung | Aufheiztemperatur | 75-115 | °C |
|---|---|---|---|
| | Strecktemperatur | 115 | °C |
| | Längsstreckverhältnis | 3,7 | |
| Querstreckung | Aufheiztemperatur | 100 | °C |
| | Strecktemperatur | 110 | °C |
| | Querstreckverhältnis | 4,0 | |
| Fixierung | Temperatur | 237 - 150 | °C |
| | Dauer | 2 | s |
| | Relaxation in TD-Richtung bei 200 - 150 °C | 7 | % |

Die so erhaltene Folie hatte eine Gesamtdicke von 50 μm, und die Deckschichten (A) und (C) waren beide 4 μm dick. Der Weißgrad der Folie betrug 78, die Transparenz 15 %, das E-Modul in MD-Richtung 4050 N/mm$^2$ und in

TD-Richtung 4805 N/mm$^2$. Der F5-Wert lag in MD-Richtung bei 96 N/mm$^2$ und in TD-Richtung bei 100 N/mm$^2$. Der Schrumpf in MD-Richtung bei 200°C lag bei 2,5 % und bei 0,1 % in TD-Richtung. Die Folie wies eine um 70 % höhere Schneidgeschwindigkeit auf als Hostaphan® WO50 und eine um 65 % höhere als Hostaphan® WDW50. Zwar war die Schneidgeschwindigkeit durch die Zugabe der laseraktiven Komponente in die Deckschichten gegenüber Beispiel 1 erwartungsgemäß weiter erhöht, es kam aber an den Schnittkanten zu einer deutlich erkennbaren Graufärbung.

Nach dem Coaten mit einer farbigen Deckschicht und anschließendem lokalen Wegbrennen der farbigen Schicht mittels ND:YAG-Laser zum Zwecke der Beschriftung (wie oben beschrieben; s. EP-A-0 645 747) war das Schriftbild nicht so weiß und gut erkennbar wie bei Beispiel 1, sondern deutlich grau eingefärbt.

## Patentansprüche

1.  Weiße, coextrudierte, orientierte Polyesterfolie umfassend eine Basisschicht (B) und mindestens eine Deckschicht (A), **dadurch gekennzeichnet, dass**

    a. die Basisschicht (B)

    - ein weißfärbendes Pigment ausgewählt aus einer oder mehreren der folgenden Substanzen: Titandioxid, Calciumcarbonat, Bariumsulfat, Zinksulfid, Zinkoxid
    und/oder
    - voidbildendes inkompatibles Polymer, welches sich mit Polyestern nicht mischen lässt und somit zu einer Eintrübung biem Verstrecken führt,

    in einer Konzentration von 2 bis 35 Gew.-% (bezogen auf das Gewicht der Basisschicht (B))
    und

    0,1 bis 15 Gew.-% (ebenfalls bezogen auf das Gewicht der Basisschicht (B)) eines Laserenergie absorbierenden Pigmentes enthält,
    - wobei es sich bei dem Laserenergie absorbierenden Pigment um ein Oxid oder Mischoxid der Elemente der fünften Periode der dritten, vierten und fünften Hauptgruppe des Periodensystems sowie gemischte Zinnoxid und Fluoride und Kupfersalze, Mischphosphate von Kupfer und Zinn und von Kupfer und Antimon, Molybän-(IV)-oxid, Wismutoxide, Lanthanborate, Manganoxide sowie Mischoxide von Kupfer und Chrom und Mischungen der genannten Oxide, Fluoride, Salze, Borate und Phosphate handelt, wobei diese Metallsalze als reine Partikel vorliegen oder nur als Coating auf Trägermaterialien aufgebracht werden, und

    b. die Deckschicht (A) ein weißfärbendes Pigment wie oben definiert und/oder voidbildendes inkompatibles Polymer wie oben definiert in einer Konzentration von 1,0 bis 35 Gew.-% (bezogen auf das Gewicht der Deckschicht (A)) enthält, wobei dieses Pigment und/oder Polymer identisch mit oder verschieden ist von dem Pigment und/oder Polymer in der Basischicht (B).

2.  Polyesterfolie nach Anspruch 1, **dadurch gekennzeichnet, dass** die Summe aus Weißpigment und inkompatiblen Polymer in der Basisschicht 35 Gew.-% nicht überschreitet und 2 Gew.-% nicht unterschreitet.

3.  Polyesterfolie nach Anspruch 1 oder 2, **dadurch gekennzeichnet, dass** das Laserenergie absorbierende Pigment als gecoateter Partikel vorliegt, wobei das Coating das Laserenergie absorbierende Material enthält.

4.  Polyesterfolie nach einem der Ansprüche 1 bis 3, **dadurch gekennzeichnet, dass** die Deckschicht (A) weniger als 0,5 Gew.-% Laserenergie absorbierendes Pigment enthält.

5.  Polyesterfolie nach Anspruch 4, **dadurch gekennzeichnet, dass** die Deckschicht (A) 0 Gew.-% Laserenergie absorbierendes Pigment enthält.

6.  Polyesterfolie nach einem der Ansprüche 1 bis 5, **dadurch gekennzeichnet, dass** die Folie einen Weißgrad von > 60 aufweist.

7.  Polyesterfolie nach einem der Ansprüche 1 bis 6, **dadurch gekennzeichnet, dass** die Folie eine Transparenz von < 60 % aufweist.

**8.** Polyesterfolie nach einem der Ansprüche 1 bis 7, **dadurch gekennzeichnet, dass** die Folie bei 200 °C einen Schrumpf in Längs- und Querrichtung von < 10 % aufweist,

**9.** Polyesterfolie nach einem der Ansprüche 1 bis 8, **dadurch gekennzeichnet, dass** die Folie bei 100 °C eine Längung (= Ausdehnung) von weniger als 3 % aufweist.

**10.** Polyesterfolie nach einem der Ansprüche 1 bis 9, **dadurch gekennzeichnet, dass** die Folie einen E-Modul von > 3000 N/mm$^2$ in Längs und Querrichtung aufweist.

**11.** Polyesterfolie nach einem der Ansprüche 1 bis 10, **dadurch gekennzeichnet, dass** die Folie F5-Werte > 80 N/mm$^2$ in Längs- und Querrichtung aufweist.

**12.** Verfahren zur Herstellung einer Folie gemäß Anspruch 1, wobei man ein Polymer bzw. eine Polymermischung für die einzelnen Schichten der Folie in einem Extruder komprimiert und zu Schmelzen verflüssigt, die Schmelzen in einer Mehrschichtdüse zu flachen Schmelzefilmen ausformt, übereinander schichtet, durch eine Breitschlitzdüse presst und auf einer Kühlwalze und einer oder mehreren Abzugswalzen abzieht, die so erhaltene Vorfolie biaxial streckt, fixiert und relaxiert, **dadurch gekennzeichnet, dass** das Polymere der Basisschicht (B) ein weißfärbendes Pigment und/oder voidbildendes inkompatibles Polymer in einer Konzentration von 2 bis 35 Gew.-% (bezogen auf das Gewicht der Basisschicht (B)) und 0,1 bis 15 Gew.-% (ebenfalls bezogen auf das Gewicht der Basisschicht (B)) eines Laserenergie absorbierenden Pigmentes enthält und die Deckschicht (A) ein weißfärbendes Pigment und/ oder voidbildendes inkompatibles Polymer in einer Konzentration von 1,0 bis 35 Gew.-% (bezogen auf das Gewicht der Deckschicht (A)) enthält, wobei dieses Pigment und/oder Polymer identisch mit oder verschieden ist von dem Pigment und/oder Polymer in der Basisschicht (B).

**13.** Verwendung einer Folie nach einem der Ansprüche 1 bis 11 als laserschneidbare Folie.

**Claims**

**1.** A white, coextruded, oriented polyester film comprising a base layer (B) and at least one outer layer (A), wherein

    a. the base layer (B) comprises

        - a whitening pigment selected from one or more of the following substances: titanium dioxide, calcium carbonate, barium sulfate, zinc sulfide, zinc oxide
and/or
- void-forming incompatible polymer which is immiscible with polyesters and therefore leads to haze during the orientation process
at a concentration of from 2 to 35 % by weight (based on the weight of the base layer (B)), and
from 0.1 to 15 % by weight (likewise based on the weight of the base layer (B)) of a pigment that absorbs laser energy,
- where the pigment that absorbs laser energy is an oxide or mixed oxide of the elements of the fifth period of the third, fourth, or fifth main group of the Periodic Table of the Elements, or else mixed tin oxides and fluorides and copper salts, mixed phosphates of copper and tin and of copper and antimony, molybdenum (IV) oxide, bismuth oxides, lanthanum borates, manganese oxides, and also mixed oxides of copper and chromium and mixtures of the abovementioned oxides, fluorides, salts, borates, and phosphates, where these metal salts are present as pure particles or are merely applied as coating to carrier materials, and

    b. the outer layer (A) comprises a whitening pigment as defined above and/or void-forming incompatible polymer as defined above at a concentration of from 1.0 to 35 % by weight (based on the weight of the outer layer (A)), where this pigment and/or polymer is identical with or different from the pigment and/or polymer in the base layer (B).

**2.** The polyester film as claimed in claim 1, wherein the entirety composed of white pigment and incompatible polymer in the base layer does not exceed 35 % by weight and is not less than 2 % by weight.

**3.** The polyester film as claimed in claim 1 or 2, wherein the pigment that absorbs laser energy is present in the form of coated particle, where the coating comprises the material that absorbs laser energy.

4. The polyester film as claimed in any of claims 1 to 3, wherein the outer layer (A) comprises less than 0.5 % by weight of pigment that absorbs laser energy.

5. The polyester film as claimed in claim 4, wherein the outer layer (A) comprises 0 % by weight of pigment that absorbs laser energy.

6. The polyester film as claimed in any of claims 1 to 5, whose whiteness is > 60.

7. The polyester film as claimed in any of claims 1 to 6, whose transparency is < 60 %.

8. The polyester film as claimed in any of claims 1 to 7, whose longitudinal and transverse shrinkage at 200 °C is < 10 %.

9. The polyester film as claimed in any of claims 1 to 8, whose elongation (= expansion) at 100 °C is less than 3 %.

10. The polyester film as claimed in any of claims 1 to 9, whose longitudinal and transverese modulus of elasticity is > 3000 N/mm$^2$.

11. The polyester film as claimed in any of claims 1 to 10, whose longitudinal and transverese F5 values are > 80 N/mm$^2$.

12. A process for production of a film as claimed in claim 1, where a polymer or a polymer mixture for the individual layers of the film is compressed in an extruder and plastified to give melts, the melts are extruded through a coextrusion die to give flat melt films, and laminated to one another, and extruded through a flat-film die, and drawn off on a chill roll and on one or more take-off rolls, and the resultant prefilm is biaxially stretched, set, and relaxed, which comprises the presence, in the polymer of the base layer (B), of a whitening pigment and/or void-forming incompatible polymer at a concentration of from 2 to 35 % by weight (based on the weight of the base layer (B)) and from 0.1 to 15 % by weight (likewise based on the weight of the base layer (B)) of a pigment that absorbs laser energy, and the presence, in the outer layer (A), of a whitening pigment and/or void-forming incompatible polymer at a concentration of from 1.0 to 35 % by weight (based on the weight of the outer layer (A)), where this pigment and/or polymer is identical with or different from the pigment and/or polymer in the base layer (B).

13. The use of a film as claimed in any of claims 1 to 11 as laser-cuttable film.

## Revendications

1. Feuille de polyester blanche coextrudée et orientée, comprenant une couche de base (B) et au moins une couche de recouvrement (A), **caractérisée en ce que**

   a. la couche de base (B) contient

      - un pigment conférant une coloration blanche choisi parmi une ou plusieurs des substances suivantes : le dioxyde de titane, le carbonate de calcium, le sulfate de baryum, le sulfure de zinc, l'oxyde de zinc et/ou
      - un polymère incompatible formant des espaces vides, qui ne peut être mélangé à des polyesters et qui entraîne donc un trouble lors de l'étirage,
      en concentration de 2 à 35 % en poids (par rapport au poids de la couche de base (B))
      et
      0,1 à 15 % en poids (également par rapport au poids de la couche de base (B)) d'un pigment absorbant une énergie laser,
      - dans laquelle le pigment absorbant une énergie laser est représenté par un oxyde ou un oxyde mixte à base des éléments de la cinquième période des troisième, quatrième et cinquième groupes principaux de la classification périodique, ainsi que des oxydes d'étain mixtes et des fluorures et des sels de cuivre, des phosphates mixtes de cuivre et d'étain et de cuivre et d'antimoine, de l'oxyde de molybdène-(IV), des oxydes de bismuth, des borates de lanthane, des oxydes de manganèse, ainsi que des oxydes mixtes de cuivre et de chrome et des mélanges des oxydes cités, des fluorures, des sels, des borates et des phosphates, ces sels métalliques se présentant sous la forme de particules pures ou étant appliqués uniquement comme revêtement sur des matériaux de support,

et

b. la couche de recouvrement (A) contient un pigment conférant une coloration blanche tel qu'il est défini ci-dessus et/ou un polymère incompatible formant des espaces vides tel qu'il est défini ci-dessus, en concentration de 1,0 à 35 % en poids (par rapport au poids de la couche de recouvrement (A)), ce pigment et/ou ce polymère étant identique (s) ou différent(s) du pigment et/ou du polymère de la couche de base (B).

2. Feuille de polyester selon la revendication 1, **caractérisée en ce que** la somme du pigment blanc et du polymère incompatible dans la couche de base ne dépasse pas 35 % en poids et n'est pas inférieure à 2 % en poids.

3. Feuille de polyester selon la revendication 1 ou 2, **caractérisée en ce que** le pigment absorbant une énergie laser se présente sous la forme d'une particule revêtue, le revêtement contenant le matériau absorbant l'énergie laser.

4. Feuille de polyester selon l'une quelconque des revendications 1 à 3, **caractérisée en ce que** la couche de recouvrement (A) contient moins de 0,5 % en poids de pigment absorbant l'énergie laser.

5. Feuille de polyester selon la revendication 4, **caractérisée en ce que** la couche de recouvrement (A) contient 0 % en poids de pigment absorbant l'énergie laser.

6. Feuille de polyester selon l'une quelconque des revendications 1 à 5, **caractérisée en ce que** la feuille présente un degré de blancheur > 60.

7. Feuille de polyester selon l'une quelconque des revendications 1 à 6, **caractérisée en ce que** la feuille présente une transparence < 60 %

8. Feuille de polyester selon l'une quelconque des revendications 1 à 7, **caractérisée en ce qu'**elle présente à 200 °C une rétraction dans la direction longitudinale et transversale < 10 %.

9. Feuille de polyester selon l'une quelconque des revendications 1 à 8, **caractérisée en ce que** la feuille présente à 100 °C un allongement (= extension) inférieur à 3 %.

10. Feuille de polyester selon l'une quelconque des revendications 1 à 9, **caractérisée en ce que** la feuille présente un module E > 3000 N/mm$^2$ dans la direction longitudinale et transversale.

11. Feuille de polyester selon l'une quelconque des revendications 1 à 10, **caractérisée en ce que** la feuille présente des valeurs F5 > 80 N/mm$^2$ dans la direction longitudinale et transversale.

12. Procédé de fabrication d'une feuille selon la revendication 1, dans lequel un polymère ou un mélange polymère pour les couches individuelles de la feuille est comprimé dans une extrudeuse et liquéfié pour donner des masses fondues, les masses fondues sont moulées dans une filière pour produits multicouches pour donner des films de masse fondue plats, elles sont ensuite disposées l'une sur l'autre, puis pressées à travers une filière plate et extraites sur un cylindre de refroidissement et un ou plusieurs cylindres d'extraction, la feuille préliminaire obtenue de la sorte est étirée biaxialement, fixée et relaxée, **caractérisé en ce que** le polymère de la couche de base (B) contient un pigment conférant une coloration blanche et/ou un polymère incompatible formant des espaces vides en concentration de 2 à 35 % en poids (par rapport au poids de la couche de base (B)) et 0,1 à 15 % en poids (également par rapport au poids de la couche de base (B)) d'un pigment absorbant l'énergie laser, et la couche de recouvrement (A) contient un pigment conférant une coloration blanche et/ou un polymère incompatible formant des espaces vides en concentration de 1,0 à 35 % en poids (par rapport au poids de la couche de recouvrement (A)), ce pigment et/ou ce polymère étant identique(s) ou différent(s) du pigment et/ou du polymère de la couche de base (B).

13. Utilisation d'une feuille selon l'une quelconque des revendications 1 à 11, sous la forme d'une feuille pouvant être découpée au laser.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 2647713 C
- EP 1322719 A
- EP 1905583 A
- DE 10042332 A
- DE 10043576 A
- WO 2002062578 A
- EP 1068949 A
- EP 0645747 A

### In der Beschreibung aufgeführte Nicht-Patentliteratur

- **Hansl Loos.** Farbmessung. Verlag Beruf und Schule, 1989